# EUROPEAN PATENT APPLICATION

(11) **EP 1 878 983 A1**
(43) Date of publication of application: **16.01.2008**
(21) Application number: 05808170.4
(22) Date of filing: 21.10.2005
(51) Int. Cl.: F24J 2/12, F24J 2/23, F24J 2/54

(54) **THERMOELECTRIC SOLAR PLANT**

(30) Priority: 06.05.2005 ES 200501211
(71) Applicant: Guradoor, S.L., 38201 San Cristobal de la Laguna (ES)
(72) Inventor: GONZÁLEZ GONZÁLEZ, Daniel, E-38390 Santa Ursula (ES)
(86) International application number: PCT/ES2005/000563
(87) International publication number: WO 2006/120260

(57) **Abstract**

The invention relates to a thermoelectric solar plant consisting in modules comprising parabolic mirrors (1) having a diameter of between 0 and 100 metres, which are supported by a solar tank (3) containing an aqueous solution of MgCl₂ (2). The inventive system employs solar energy reflection and refraction in order to produce onther types of energy cleanly. According to the invention, each mirror comprises: a mobile system (8), which tilts the mirror by a solid angle of 30° towards the east and west; and a tower or shaft (6) with a height of between 0 and 100 metres, the top of which is equipped with a graphite spheroid (7) which is covered with zirconium carbide and at which the energy is converted in order to be conveyed by other fluids (water, gas, etc.). The aforementioned spheroid contains a Fresnel lens for obtaining a large concentration of luminous energy which is used to produce pure silicon by means of evaporation thereof. Radiation energy is used to obtain electrical power. The energy captured is conveyed using high-strengh steel pipes which extend through the shaft (6). The excess energy is stored in the dissolution of the solar tank (2) in order later to be transformed into electrical power, hydrogen, drinking water, fuels and derivatives of nitrogen, thereby rendering the elctrical power, drinking water and chemical industry sectors independent of each other.

## Description

### OBJECTIVES OF THE INVENTION

The technical study of the design refers to obtaining clean, renewable energies, without contamination of the environment, using solar energy in its whole spectrum.

The object is to obtain an energetic plant supplying the energy to the geographic region where it is located, using the remaining energy to obtain combustible liquid, pure silicon and drinking water.

This plant is projected as a way in obtaining alternative energy, as the raw material would be the solar energy, for which reason it would not have any negative repercussion neither from the environmental nor safety point of view.

### BACKGROUND OF THE INVENTION

Actually the main source of energy is the petroleum, a non-renewable raw material, and its transformation and use is directly attacked by the environment. From the condition of non-renewable derives the fact of the unstoppable rise of the price of a barrel of petroleum; referring to the environment the transformation of the petroleum into its by-products causes an important ecological damage, due to the large quantity of contaminating agents generated in its transformation and in the final use of the obtained combustibles (petrol, diesel oil, GLP etc.) for obtaining energy.

### DESCRIPTION OF THE INVENTION

The proposed energetic plant resolves in a fully satisfying way the previous problems, producing a large quantity of energy from the solar energy (costs 0) and without negative repercussions on the environment.

Therefore the invention starts from the use of parabolic mirrors from 0 to 100 metres of diameter, reflecting and concentrating the solar energy in a point (source of the parabolic mirrors), returning the light through the shaft and the radiation is dispersed inside the spheroid. This spheroid is an interchanging cap of energy; its external part is made of zirconium carbide and the internal part of graphite, with tubes in the form of pears to transmit a potency of 10000 KWhpoint. Internally is inserted a "Fresnel"-lens", concentrating the light energy at high density, which is conducted through the shaft to a crucible of evaporation in order to obtain the pure silicon. The spheroid contains helium gas at low pressure absorbing the radiation, heating in this way the water is transformed into steam which drives the alternator turbines for the production of electricity and obtaining drinking water. The temperature of exchange is 1600 K and the temperature in the source reaches 5600 K.

This energy of reflection, conducted through the shaft, reaches a temperature in the crucible of evaporation of silicon superior to its temperature of evaporation, which allows us following the method of "Czochralski" obtaining mono-crystals of silicon and sheets of 50 um, adhered to a closed mesh, enabling us to obtain a continuous production of solar panels. In this way we close the basic cycle.

With the remnant thermal energy a conductor gas (helium) is heated that will produce steam, for the turbines to work, to produce electric energy and dirnking water.

Each parabolic mirror rests on a rectangular solar tank containing a saline solution (MgCl₂), supported in a ball-and-socket joint situated in the centre to enable it to turn towards the east and the west. This solution makes it feasible that the weight of the structure is borne by the water pressure. At the moment of rotation, valves are opened, located approx. 30 metres from the axle of the parabolic mirror, to control the pressure and to avoid a deformation of the structure. The excessive heat added to the external captured energy and stored in the solar tank raises the temperature of the dissolution up to 80-90°C, when the second cycle begins to work enabling that in moments of low or zero solar radiation the transmitted dissolution to the parabolic mirror gives the energy to carry on reflecting in the source.

Referring to excess of energy, this is rectified to the tension of 2 V and potency of 45 KWh, obtaining 1 mol of H₂. With this hydrogen we proceed to the hydrogenation of carbon, obtaining in this way liquid combustibles (petrol and diesel oils).

Each module is composed of 8 parabolic mirrors, which rotate with a solid angle of 30° to the left and the right, according to the solar movement, optimising in this way the collection of energy coming from the sun.

The capacity of energetic production of each mirror is 7500 KWhpoint per reflection, plus the stored refraction in the solar tank for the transfer and the thermodynamic transformation.

The metal structure is designed correctly, also the mounting and the work as well.

The materials to be used in the critical points are zirconium carbide (CZr) and graphite and the reflection lens "Fresnel".

All metal elements are protected against corrosion. The composition of the anticorrosive is made of 3 % of sulphur, 25 % of carbon and 72 % of magnesium. All this is protected against humidity and mechanical reactions by PVC-boxes.

To make these plants competitive, the modules were installed in a way that 30 % of the optimal productivity remains competitive with the cost of the petroleum at 40 $ per barrel.

The ideal sites of location of these plants would be all the places in the world, where the solar radiation is above 3,5 KW/day and an annual average higher than 4,6 KW/day.

According to our study I+D we would obtain a total energetic independency, which would lead to maximum development.

### IMPORTANT NOTE:

In order to transport this energy through any territory without altering the environment, it is a necessary and important condition to use the patented conductor of electric energy with file N° P200501210.

### DESCRIPTION OF THE DESIGNS

In order to complete the realized description and aiming to achieve a better understanding of the characteristics of the invention are incorporated a set of designs, where with illustrative and unlimited character the following is shown:
**Figure 1.-** Shows the illustration of a mirror with parabolic form (1), with its energetic shaft (6) and spheroid (7), located in the extremity of the shaft. Each mirror rests on a salt dissolution (MgC12) (2), contained in the solar tank (3), a rectangular enclosure of dimensions 125 x 125 metres and with a height of 14 metres. The flotation line (5) of the brine is at a height of 10 metres approx. The parabolic mirror has incorporated in the structure various valves (4), to allow the entrance of water to withstand the pressure at each revolution.
**Figure 2.-** Shows the positions of the parabolic mirror, the shaft and the spheroid will take in the moment of the maximum inclination, 30° towards the east and 30° towards the west.
**Figure 3.-** Shows the transversal section of a spherical cap, allowing observation of the energetic shaft (3), maintained by 4 metal towers (4), situated in the mid point of each of the sides of the solar tank (A, B, C and D), as shows figure 4.
**Figure 4.-** Shows the view on the parabolic mirror-plant (1), the solar tank (2) and the shaft (3). In the centre of the walls of the tank are situated the 4 metal towers (A, B, C and D), which hold and guide the shaft and the cap by tensile cords (4), by which the movement of the parabolic mirror and shaft are controlled by servo motors.
**Figure 5.-** Shows in detail the ball-and-socket joint, located in the centre of the parabolic mirror and the shaft, which has to move it all with a solid angle of 30° to each side, depending on the rotation of the sun to achieve in this way an optimum reception of the sun's energy and to keep fixed the point of reception of the energy of reflection and refraction:
**Figure 6.-** Shows in detail the spheroid receiver, composed by an external screen of zirconium carbide (2) and further inside graphite (3). In the inner part is located the lens Fresnel (1), in charge to concentrate and reflex the light energy of the sun (7) and to send it through the gun (9) to the crucible of evaporation of silicon. Through the tubes (4) in the form of a pear of galvanized black iron circulates the water (6) and the steam (5), in charge of moving the turbines and alternators. The internal whole of the spheroid contains helium gas (8), which absorbs the infrared radiation, heating in this way the water and transforming it into steam.

## Claims

1. We claim the complete system of transference of energy, composed of a parabolic mirror of 0 to 100 metres in diameter and sun collectors with shaft of 0 to 100 m of height and spheroid which acts as an interchanger of conditions of energy, applying intermediate cycles to reduce the temperature and connecting to turbo alternators for obtaining the conventional electric energy. The excess of energy is rectified at 2 V for obtaining the hydrogen by electrolysis (produce 1 mol of H2 consumes 45 KWh at a temperature of the electrolyte of 68°C).
Shaft composed by two concentric steel tubes. In the annular space comprised between the two tubes are installed the conductions for cold and hot water, mechanically separated. The internal space is allocated for passing the ray of light of high density, directed to the crucible of evaporation of silicon.
The parabolic mirror is internally covered by highly reflecting material from glass to silver. In its structure, at a determined distance by the diameter, are installed several valves to enable the dissolution to flow, above which the parabolic mirror is resting, in order to avoid deformations in the structure and to reduce the pressure of this dissolution in the moment of revolution. Several pumps empty the dissolution contained in the parabolic mirror when realizing the inverse movement.
The cleaning of the parabolic mirror is executed by rakes of the same radius as the one of the parabolic mirror, rotating around the shaft.
The movement of the whole unit, formed by the parabolic mirror and the shaft, is executed by towers and servo motors by remote control, following in this way the sun trajectory.
